# EUROPEAN PATENT SPECIFICATION

(11) **EP 0 812 302 B1**
(45) Date of publication and mention of the grant of the patent: **04.07.2001**
(21) Application number: 96926676.6
(22) Date of filing: 09.08.1996
(51) Int. Cl.: C02F 1/463

(54) **IONISER FOR WATER DISINFECTION AND SEPARATION OF CONTAMINANTS**
IONISIERUNGSEINRICHTUNG FÜR WASSERENTKEIMUNG UND ABTRENNUNG VON VERUNREINIGUNGEN
IONISATEUR DE DESINFECTION DE L'EAU ET EXTRACTION DE CONTAMINANTS

(30) Priority: 11.08.1995 PT 10175795
(43) Date of publication of application: 17.12.1997
(73) Proprietor: Silva Bento, Julio, 2795 Linda-a-Velha (PT)
(72) Inventor: Silva Bento, Julio, 2795 Linda-a-Velha (PT)
(74) Representative: Costa Franca, Vitor Hugo da
(86) International application number: PT9600006
(87) International publication number: WO9707061

(56) References cited:
- WO-A-94/08903
- BE-A- 451 481
- GB-A- 2 261 880

## Description

### 1. General

It is known that ions (positive) of certain metals, drawn by water contaminants (negative) - like algae, bacteria, fungi, virus, microorganisms in general - destroy them. Such contaminants aggregate, then, in bigger particles (flocculation) attaining enough size to be retained, for example, in ordinary sand filters. This effect of the lowest quantities of metallic ions (oligodinamic effect) on the organic matter in the water was identified by the Swiss botanist Naageli, already in 1880.

The metal ions form very slowly by dissolution of the metal in water; such process can be accelerated and controlled by electric power. This method is used in very different treatments like drinkable water or industrial effluents, including swimming-pools.

In swimming-pools, the aim is to reduce drastically or eliminate, the use of chemicals, with all the resulting advantages to the health and comfort of the bathers.

The ion production is proportional to the intensity of a continuous current between metallic electrodes immersed in the water being treated, that works as an electrolyte. The electrodes, acting as anodes, release positive ions. Instead of all ions deposing on the cathode, some of them should disperse in the water to be treated. To equalise the resulting electrode consumption and promote the electrodes' cleaning, the polarity of the electrodes is inverted periodically (the anodes becoming cathodes and vice-versa).

### 2. State of the art

As it was referred, the general principle explored on the present invention dates from 1880, and one can find in the market systems using metallic electrodes immersed in the water being treated forming two groups, one connected to the positive pole (+) and the other to the negative pole (-) of the source of continuous current attaching on with the filtration pump.

The electrodes are usually placed in a box installed in the pressure piping, between the pump and the filter.

One case is patent BE-A-451 481 from KATADYN where the electrodes are disposed in a vessel in a circular arrangement.

A second example of this same situation is patent application GB-A-2261880 from TAYLOR.

### 3 - Patent novelty. Description

The new solution of the present patent is basically characterised by:

### a) Geometrical lay-out of the electrodes and their proportions allowing a water flow through the space between the electrodes with and uniform high radial velocity.

In the preferred form of realisation the electrodes are installed on the lid of the filter itself, located between the pump and the filtering sand bed.

The electrodes - that are in greater number, then usually, given the great filter dimensions - are disposed in circle forming a kind of cage without bottom. Thus, the strong water current in the free spaces between electrodes, drags better the ions released from the anodes and ionises more efficiently the water contaminants. The electrodes are at times changed from positive to negative polarity and behave as an electric condenser. From there follows - on the occasion of polarity reversal - a strong automatic current intensity rise that increases the detachment effect of the inorganic (Ca, Mg, etc.) or organic ions that might have set on the electrodes. In a preferred form of the invention, the polarity reversal is performed automatically. Thus, not: only adherence cleanings are executed in much shorter intervals, but it is also assured that throughout the time, all electrodes operate during equal periods as anodes and as cathodes, becoming equally worn out and increasing their duration.

With this system the water coming from the pump, ascends axially through the (non-existent) electrodes cage bottom, getting out radially through the small free spaces between them, attaining there high speeds that complement mechanically the electrical cleaning action just referred.

It is also obtained a stronger drag of the ions released by the anodes (that instead of deposing mainly on the cathodes) are better mixed with the water to be treated rendering easier the contact with the contaminants.

### b) Use of cheaper and easier to work materials for electrodes

Of the said lay-out of the electrodes among themselves and between those and the water flow to be treated, results an important efficiency increase. In contrast with other realisations, that use, electrolytic high purity copper (Cu) electrodes and silver (Ag), in this case is used the brass (Cu + Zn) much cheaper and easier to work.

### c) Elimination of the electrodes'box

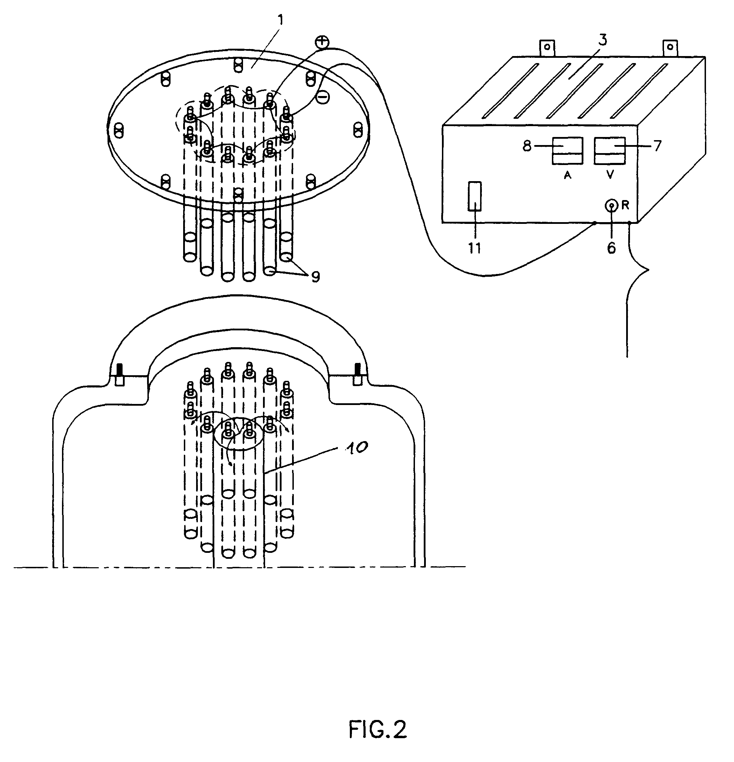

Since the electrodes are mounted on the filter cover itself (movable too access to the sand) according to figure 2, the installation on existing swimming-pools is very easy. It may even be executed by the owner himself that would replace the original filter lid by the plate with the electrode set. On all the other known systems, an electrodes'box for ionisation must be intercalated on the piping.

The forms of realisation of the system are presented on the accompanying drawings, in which:
- Figure 1 is a general scheme of water circulation and filtering where the system is installed,
- Figure 2 is an elevational view of the filter and the system,
- Figure 3 is the plant and cut of the electrodes (9) and a cut of a covering lid of the electric wires in a form of realisation of the invention.

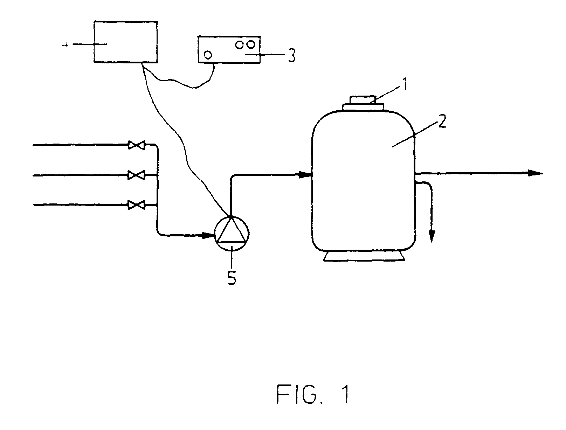

Referring to figure 1, there is shown the lid or cover piece (1) where the electrodes are installed in the filter (2) connected to the source of continuous current (3) that, on its turn, is fed in alternate current of the case (4), that simultaneously feeds the pump motor. When the clock switches the pump begins the electrode feeding, stopping when the pump stops. The case (3) has a regulator (6) that allows electrode tension variation from 0 to 15 volts. The case (3) may have a voltmeter (7) and has always an amperimeter (8), allowing to regulate the intensity of ionisation.

The water to be treated enter in the vessel (2) through the inlet pipe and flows radially between the electrodes. The ionisation takes place with the subsequently floculation and then the water flows through the filtering material and gets out of the vessel by the outlet.

On figure 2, there is shown the lid (1) with the electrodes (9) alternately interconnected in (+) and (-) sets. The water flow (10) enters axially to the inside of the electrode cage (9) and comes out radially through the intervals between them. In the figure, there is also represented the source of continuous current (3) with the regulator (6), the voltmeter (7), the amperimeter (8) and the general switch (11).

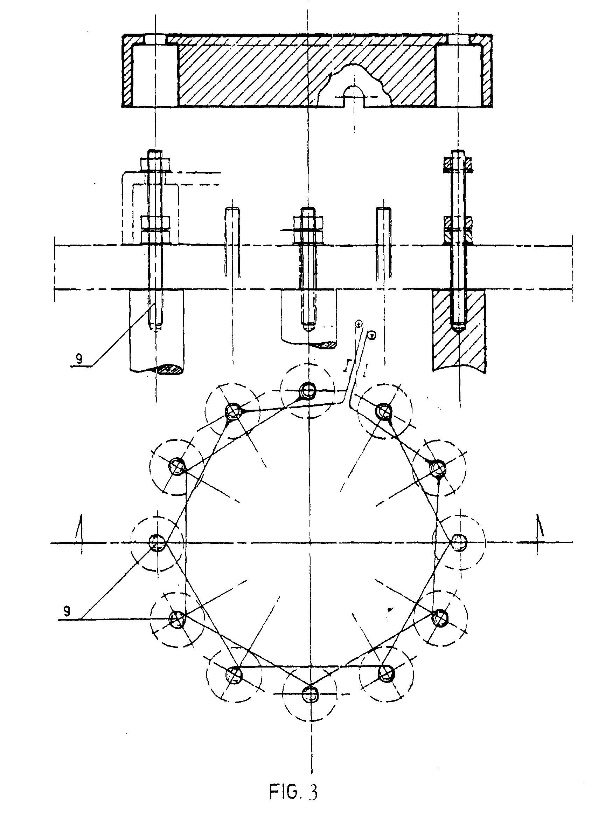

The figure 3 shows a constrution drawing of the lid in a preferable form of the invention where the cage are formed by twelve electrodes.

## Claims

1. Ioniser for water disinfection and separation of contaminants, namely organic and some inorganic, like iron (Fe) using positive ions released from electrodes that bind to the contaminants (like algae, bacteria, virus, and fungi, with negative electric charge), killing them and promoting their aggregation (flocculation) in particles big enough to decant or be retained in ordinary filters (sand filters, for example), **characterised by** the fact that the electrodes are elongated rod electrodes (9), with lengths between 100 and 250 mm and diameters between 10 to 25 mm made of brass (Cu/Zn) disposed in circle, at distances of 4 to 10 mm, from each other, with (+) and (-) polarities, forming a bottomless cage, its upper part being a plate (1) of nonconducting material to where the electrodes are fixed (Figures 1 and 2), the plate (1) is the lid of a vessel (2) containing filtering material, one inlet pipe and one outlet pipe and the inlet pipe ends in the middle of the cage formed by the electrodes along his axle.

2. Ioniser for water disinfection and separation of contaminants, according to claim 1, **characterised** by a periodical polarity commutation of the current.

3. Ioniser for water disinfection and separation of contaminants, according to claims 1 and 2, **characterised by** the commutation of the polarity of the current being commanded by a time controlled automatic system.

## Patentansprüche

1. lonsierungseinrichtung für Wasserentkeimung und Abtrennung von organischen und einigen anorganischen Verunreinigungen, wie z.B. Eisen (Fe), unter Verwendung von positiven lonen, die von Elektroden freigegeben werden und sich an die Verunreinigungen (Algen, Bakterien, Viren, Pilze mit negativer Leitung) anbinden, indem sie sie vernichten und deren Aggregation (Flockulation) in Flocken fördern, die gross genug sind um dekaniert und von normalen Filtern (z.B. Sandfiltern) aufgefangen zu werden. Diese lonisierungseinrichtung zeichnet sich dadurch ab dass die Elektroden langgestreckten Stäbchen (9) mit einer Länge von 100 bis 250 mm und einem Durchmesser von 10 bis 25 mm gleichen, die aus Messing (Cu/Zn) bestehen und in einem Abstand von 4 bis 10 mm kreisförmig angeordnet sind. Mit einer (+) und (-) Polaritä bilden die Elektroden einen bodenlosem Käfig und werden somit an die obere Platte (1) aus nicht leitendem Material gebunden (Figuren 1 und 2). Die Platte (1) ist der Deckel eines Gefässes (2) das Filtermaterial, sowie eine Einlass- und Ablassleitung beinhaltet. Die Einlassleitung ended in der Mitte des Käfigs, die von den Elektroden entlang der Achse gebildet wird.

2. lonsierungseinrichtung für Wasserentkeimung und Abtrennung von Verunreinigungen gemäss des Anspruchs 1, ausgezeichned durch eine periodische Kommutierung der Polarität des Stroms.

3. lonsierungseinrichtung für Wasserentkeimung und Abtrennung von Verunreinigungen gemäss des Anspruchs 1und 2 ausgezeichnet durch Kommutierung der Polarität des Stroms und erfasst durch eine zeitgesteuertes Automatiksystem.

## Revendications

1. lonisateur de désinfection de l'eau et extraction de contaminants organiques et certains inorganiques, comme le fer (Fe), grâce à l'emploi d'ions positifs libérés d'électrodes et se liant aux contaminants (comme les algues, bactéries, virus et champignons, qui possèdent tous une charge électrique négative), les tuant et provoquant leur association (floculation) en particules assez grandes pour être décantées ou être retenues dans des filtres ordinaires (filtres de sable, par exemple), caractérisé par le faît que les électrodes sont disposées en tiges d'électrodes, avec une longueur comprise entre 100 et 250 mm, et un diamètre compris entre 10 et 25 mm, faites de cuivre (Cu/Zn), disposées en cercle, à une distance de 4 à 10 mm l'une de l'autre, avec des polarités positives (+) et négatives (-), formant une cage sans fond, sa partie supérieure étant un plateau d'un matériel non-conducteur, où les électrodes sont fixées (figures 1 et 2).
Le plateau (1) est le couvercle d'un vaisseau (2), contenant le matériel filtrant, un tuyau d'arrivée et un de sortie, avec la fin du tuyau d'arrivée terminant au milieu de la cage formée par les électrodes le long de son axe.

2. lonisateur de désinfection de l'eau et extraction de contaminants, selon la caractéristique 1, caractérisé par une commutation périodique de la polarité du courrant.

3. lonisateur de désinfection de l'eau et extraction de contaminants, selon les caractéristiques 1 et 2, caractérisé par la commutation de la polarité du courrant, contrôlé par un système automatique de contrôle du temps (minuterie).
